# EUROPÄISCHE PATENTSCHRIFT

(11) **EP 0 921 029 B1**
(45) Veröffentlichungstag und Bekanntmachung des Hinweises auf die Patenterteilung: **04.02.2004**
(21) Anmeldenummer: 98250417.7
(22) Anmeldetag: 30.11.1998
(51) Int. Cl.: B60N 2/20

(54) **Fahrzeugsitz mit klappbarer Rückenlehne**
Vehicle seat with tiltable backrest
Siège de véhicule à dossier rabattable

(30) Priorität: 05.12.1997 DE 19753968; 17.02.1998 DE 19806385
(43) Veröffentlichungstag der Anmeldung: 09.06.1999
(73) Patentinhaber: Faurecia Autositze GmbH & Co. KG, 31655 Stadthagen (DE)
(72) Erfinder: Lange, Dieter, 32469 Petershagen (DE)
(74) Vertreter: Seewald, Jürgen, Dipl.-Ing.

(56) Entgegenhaltungen:
- EP-A- 0 269 348
- DE-A- 3 923 966
- DE-A- 4 326 623
- US-A- 5 022 698
- US-A- 5 611 600

## Beschreibung

Die vorliegende Erfindung betrifft einen Fahrzeugsitz mit klappbarer Rückenlehne, die mittels Adaptern drehgelenkig am Sitzrahmen gehaltert ist, welche eine Verriegelungsklinke auf einem Lagerbolzen schwenkbar aufnehmen, die in Schließstellung mit ihrem Klinkenmaul einen sitzteilfesten Anschlag umgreift und mittels eines Lösegliedes entriegelbar ist.

Bei einem Kraftfahrzeugsitz ist in der Regel die Rückenlehne in ihrer Neigung relativ zu dem Sitzteil einstellbar, um die Rückenlehne unterschiedlichen Körpergrößen und Sitzgewohnheiten optimal anzupassen. Unabhängig von dieser Einstellung der Neigung der Rückenlehne ist diese bei dem hier relevanten Stand der Technik an dem Sitzteil zwischen zwei Endstellungen klappbar gelagert. In einer ersten Endstellung, der sogenannten Gebrauchslage, ist die Rückenlehne nach hinten geschwenkt und dort gegen Umklappen nach vorne arretiert. Nach Lösen einer Verriegelung kann die Rückenlehne von Hand in Fahrtrichtung umgeklappt werden, bis das obere Ende der Rückenlehne etwa am Lenkrad anliegt. Diese Lösung ist insbesondere bei zweitürigen Autos vorteilhaft, um das Einsteigen von Personen in den Fond zu erleichtern.

In DE 44 17 491 A1 ist ein Fahrzeugsitz mit den obenstehend angeführten Merkmalen beschrieben. Bei dieser und anderen bekannten Konstruktionen besitzt das Klinkenmaul der Verriegelungsklinke in seinem an dem sitzfesten Anschlag anliegenden Bereich eine ansteigende Spannfläche, auf die der sitzteilfeste Anschlag beim Schließen der Verriegelungsklinke aufläuft. Da der Adapter zudem von oben fest auf dem Anschlag aufliegt, wird eine toleranzunabhängige, spielfreie Halterung des Adapters am Anschlag erreicht. Bei einem Crash wirken auf die Verriegelungsklinke starke Zugkräfte, die, da der Anschlag an der vorgesehenen ansteigenden Spannfläche des Klinkenmauls anliegt, ein Drehmoment hervorrufen, welches so groß werden kann, daß die Verriegelungsklinke ungewollt öffnet. Um dies zu verhindern, sind Vorkehrungen getroffen, um die Verriegelungsklinke in ihrer Schließstellung zu sichern. Dazu ist ein schwenkbar am Adapter angeordneter Sicherungsnocken vorgesehen, der in Schließstellung mit einer Hubfläche auf dem Rücken der Verriegelungsklinke aufliegt. Zwischen dem Sicherungsnocken und der Verriegelungsklinke ist eine Zugfeder gespannt, welche die ansteigende Spannfläche der Verriegelungsklinke durch Vermittlung der aufliegenden Hubfläche des Sicherungsnockens, dem beschriebenen Drehmoment entgegenwirkend, auf den sitzteilfesten Anschlag aufdrückt. Zum Lösen der Verriegelungsklinke ist ein Bowdenzug vorgesehen, der den Sicherungsnocken beaufschlagt. Bei Betätigung des Bowdenzuges wird zunächst der Sicherungsnocken verschwenkt, so daß er von der Anlage an die Verriegelungsklinke freikommt, wodurch die Verriegelungsklinke infolge der Wirkung der Zugfeder in ihre Öffnungslage schwenken kann.

Ein weiterer gattungsgemäßer Fahrzeugsitz ist in DE 43 26 623 A1 offenbart. Auch bei diesem Fahrzeugsitz wird eine toleranzunabhängige, spielfreie Halterung des Adapters am sitzteilfesten Anschlag durch eine am Klinkenmaul vorgesehene ansteigende Spannfläche erreicht. Um ein ungewolltes Öffnen der Verriegelungsklinke bei einem Crash zu verhindern, ist ein Sperrblech vorgesehen, welches über eine Drehachse schwenkbar an der Verriegelungsklinke gelagert ist. Im Bereich des Lagerbolzens der Verriegelungsklinke am Adapter besitzt das Sperrblech ein um seine Drehachse mit der Verriegelungsklinke gekrümmtes Langloch. Das Sperrblech arretiert die Verriegelungsklinke in ihrer Sperrlage, so dass diese auch im Crashfall nicht öffnen kann.

Der Nachteil der oben beschriebenen und aller anderen bekannten Konstruktionen ist darin zu sehen, daß eine Sicherung der Verriegelungsklinke in Form zusätzlicher Bauteile erforderlich ist. Häufig wird diese Sicherung nicht für ausreichend erachtet, so daß zusätzlich eine Sicherung der Sicherung eingebaut wird.

Aufgabe der vorliegenden Erfindung ist es, für einen Fahrzeugsitz der eingangs genannten Art eine Lösung zur Verfügung zu stellen, die keine zusätzlichen Bauteile zur Sicherung der Schließstellung der Verriegelungsklinke erfordert, also sehr einfach aufgebaut und dennoch sicher ist.

Gelöst wird diese Aufgabe bei einem Fahrzeugsitz der eingangs genannten Art dadurch, daß die Verriegelungsklinke mittels eines Langlochs auf dem Lagerbolzen gelagert ist, wobei die dem sitzteilfesten Anschlag abgewandte Wandung des Langlochs als Spannfläche ausgebildet ist, auf die der Lagerbolzen beim Schließen der Verriegelungsklinke aufläuft.

Natürlich wirkt auch bei dieser Konstruktion, wie im Stand der Technik beschrieben, im Crashfall ein Drehmoment auf die Verriegelungsklinke. Während dieses beim Stand der Technik jedoch ein "Herauswandern" des Anschlags aus dem in Schwenkrichtung offenen Klinkenmaul und damit ein Öffnen der Verriegelungsklinke bewirkt, kann es bei der erfindungsgemäßen Lösung seine Wirkung nicht entfalten, da die Verriegelungsklinke schon nach einem kurzen Schwenkweg um den sitzteilfesten Anschlag mit ihrer Langlochwandung an den Lagerbolzen anschlägt. Da darüber hinaus am Klinkenmaul keine Spannfläche mehr erforderlich ist, kann die Anlage zwischen dem Anschlag und dem Klinkenmaul so gestaltet werden, daß die Verriegelungsklinke im Crashfall nicht vom Anschlag freikommt, also an dieser Stelle im wesentlichen Selbsthemmung vorliegt. Damit ist gewährleistet, daß die Verriegelungsklinke im Crashfall nicht öffnet. Zusätzliche Bauelemente zur Sicherung der Verriegelungsklinke in ihrer Schließstellung sind nicht erforderlich.

Ein weiterer Vorteil der Erfindung ist darin zu sehen, daß die nach dem Stand der Technik zum Ausgleich von verschleißbedingten Toleranzen erforderliche Hinterschneidung des Klinkenmauls nicht erforderlich ist, da diese in das Langloch verlegt ist. Dadurch kann das Klinkenmaul kürzer und damit die Verriegelungsklinke schwächer ausgeführt werden (Gewichtseinsparung).

Auch bei der vorliegenden Erfindung ist aufgrund der Spannfläche des Langlochs eine toleranzunabhängige, spielfreie Halterung des Adapters und damit der Rückenlehne am sitzteilfesten Anschlag gewährleistet. Damit sich diese nach dem Schließen der Verriegelungsklinke automatisch einstellt, ist in weiterer Ausgestaltung der Erfindung die Verriegelungsklinke durch eine Kraft beaufschlagt, die diese um den sitzteilfesten Anschlag schwenkt, wodurch der Lagerbolzen auf die Spannfläche aufläuft.

Weitere, vorteilhafte Ausführungsformen der Erfindung ergeben sich aus den übrigen Unteransprüchen.

Die Erfindung wird nachstehend anhand von Ausführungsbeispielen näher erläutert. In der dazugehörigen Zeichnung zeigt:
- Fig. 1: einen grundsätzlichen Aufbau eines Fahrzeugsitzes in einer vereinfachten Seitenansicht,
- Fig. 2: eine schematische Darstellung eines Adapters mit der Verriegelungsklinke in Crashlage nach einer ersten Ausführungsform,
- Fig. 3: eine Anordnung gemäß Fig. 2 bei in spielfreier Schließstellung befindlicher Verriegelungsklinke,
- Fig. 4: eine Anordnung gemäß Fig. 2 bei geöffneter Verriegelungsklinke,
- Fig. 5: eine schematische Darstellung eines Adapters mit in Crashlage befindlicher Verriegelungsklinke nach einer zweiten Ausführungsform,
- Fig. 6: eine Anordnung gemäß Fig. 5 bei in spielfreier Schließstellung befindlicher Verriegelungsklinke,
- Fig. 7: eine Anordnung gemäß Fig. 5 bei in maximal möglicher spielfreier Schließstellung befindlicher Verriegelungsklinke,
- Fig. 8: eine Anordnung gemäß Fig. 5 bei maximal entriegelter Verriegelungsklinke,
- Fig. 9: eine Anordnung gemäß Fig. 5 bei in Lehnenklappstellung befindlicher Verriegelungsklinke,
- Fig. 10: eine schematische Darstellung eines Adapters mit der Verriegelungsklinke in Crashlage nach einer weiteren Ausführungsform,
- Fig. 11: eine Anordnung gemäß Fig. 10 bei in spielfreier Schließstellung befindlicher Verriegelungsklinke,
- Fig. 12: eine Anordnung gemäß Fig. 10 mit minimal entriegelter Verriegelungsklinke,
- Fig. 13: eine Anordnung gemäß Fig. 10 mit maximal entriegelter Verriegelungsklinke, und
- Fig. 14: eine Anordnung gemäß Fig. 10 bei in Lehnenklappstellung befindlicher Verriegelungsklinke.

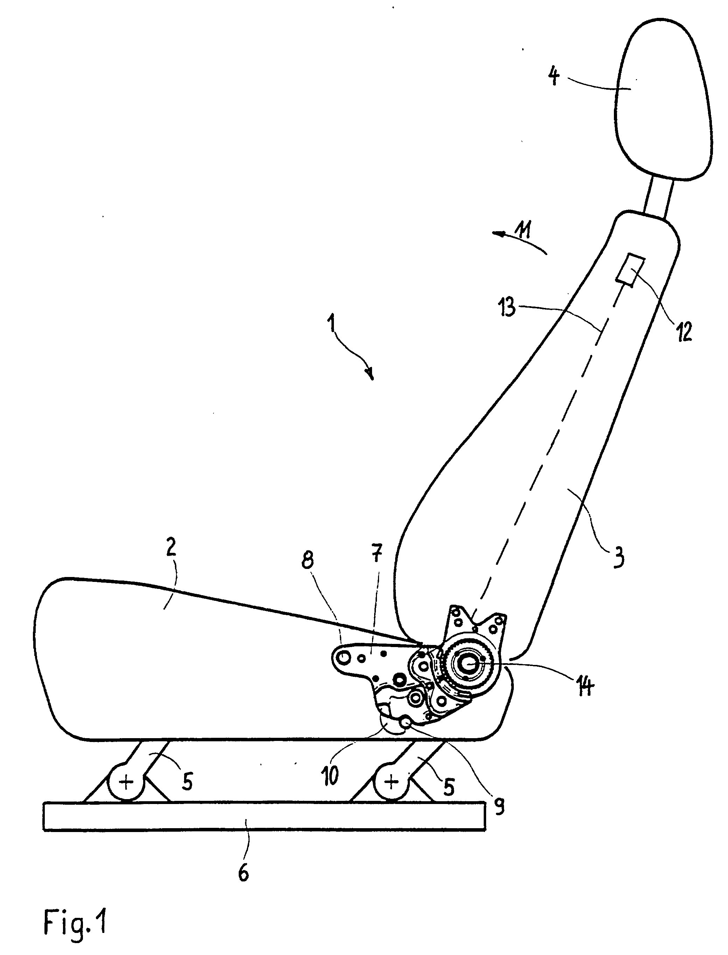

Fig. 1 zeigt einen Fahrzeugsitz 1 mit einem Sitzteil 2, einer Rückenlehne 3 und einer Kopfstütze 4. Der Fahrzeugsitz 1 ist über eine Sitzhöhenverstellung 5 auf einer Sitzschiene 6 des Kraftfahrzeugs gelagert. Die Rückenlehne 3 ist über Adapter 7, die die Verbindung zu üblichen Neigungsverstellbeschlägen 14 herstellen, beidseitig klappbar um Bolzen 8 an der tragenden Struktur des Sitzteils 2 befestigt. Bei in Gebrauchslage befindlicher Rückenlehne 3 liegen die Adapter 7 auf einem Anschlagbolzen 9 auf, welcher starr mit der tragenden Struktur des Sitzteils 2 verbunden ist bzw. zu dieser gehört. Der Anschlagbolzen 9 wird bei in Gebrauchslage befindlicher Rückenlehne von einer schwenkbar am Adapter 7 gelagerten Verriegelungsklinke 10 umfaßt. Durch diese Verriegelung ist ein Vorklappen der Rückenlehne 3 in Richtung 11 verhindert. Am oberen seitlichen Ende der Rückenlehne 3 ist ein Betätigungsglied 12 angeordnet. Durch seine Betätigung wird über einen Bowdenzug 13 die Verriegelungsklinke 10 an dem Adapter 7 so geschwenkt, daß sie von dem Anschlagbolzen 9 freikommt und die Rückenlehne 3 in Richtung 11 nach vorn geklappt werden kann, was nachstehend noch näher erläutert wird. Fig. 1 dient zur Anschauung aller nachfolgenden Ausführungsbeispiele.

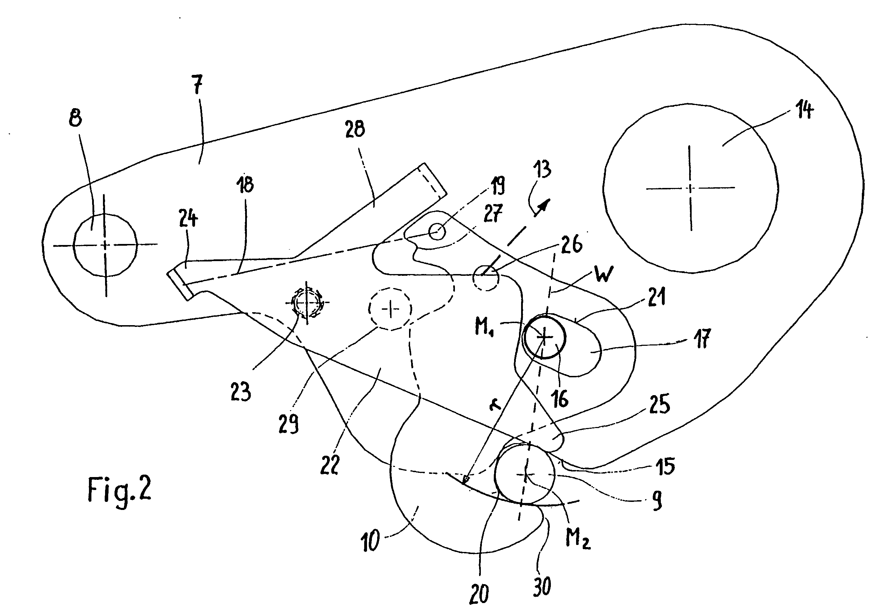

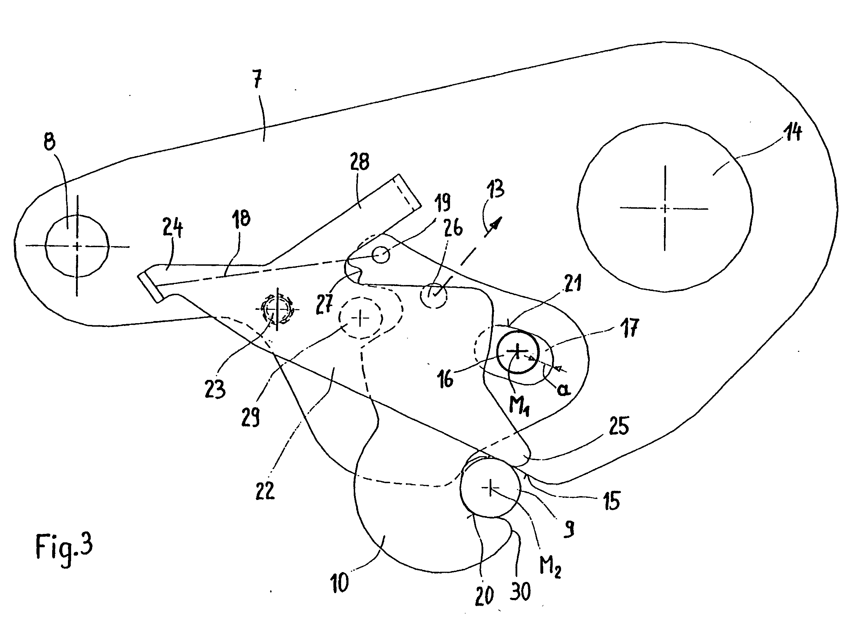

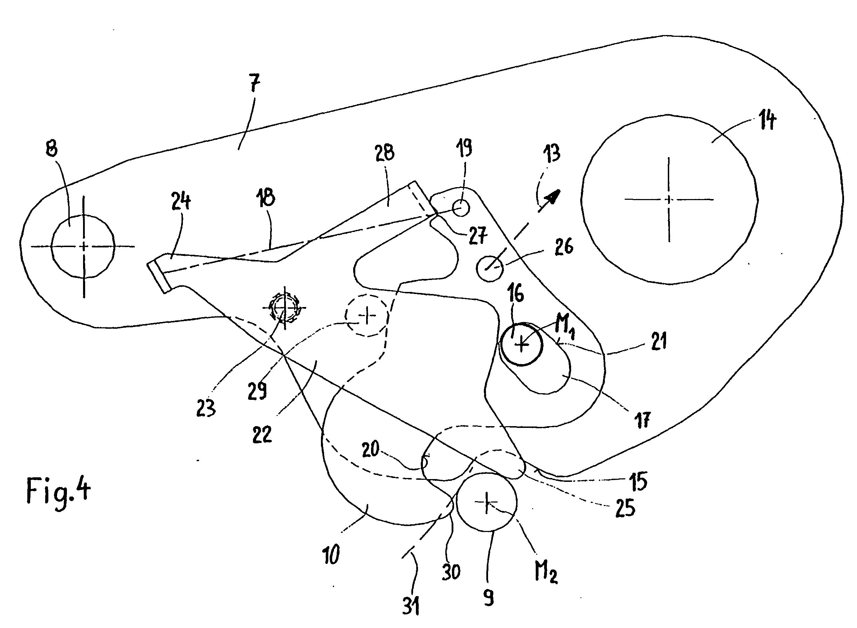

Die Figuren 2 bis 4 zeigen einen der Adapter 7 in vergrößerter und vereinfachter Darstellung nach einer ersten Ausführungsform der Erfindung. Als Bezugspunkte zu dem nicht mehr dargestellten Fahrzeugsitz sind der sitzteilfeste Bolzen 8, als Kreis vereinfacht der Neigungsverstellbeschlag 14 sowie der sitzteilfeste Anschlagbolzen 9 eingezeichnet. Bei in Gebrauchs-lage befindlicher Rückenlehne 3 (Fig. 1) liegen die Adapter 7 mit ihrer an dieser Stelle konkav ausgeführten Unterseite 15 auf dem Anschlagbolzen 9 auf.

Die Verriegelungsklinke 10 ist auf einem adapterfesten Lagerbolzen 16 gelagert und dazu mit einem Langloch 17 versehen, durch das der Lagerbolzen 16 hindurchragt. Der Bolzen 16 ist als Kopfniet ausgeführt, dessen Kopf die Konturen des Langlochs 17 seitlich übergreift, wodurch ein Abheben der Verriegelungsklinke 10 vom Adapter 7 verhindert ist (nicht dargestellt).

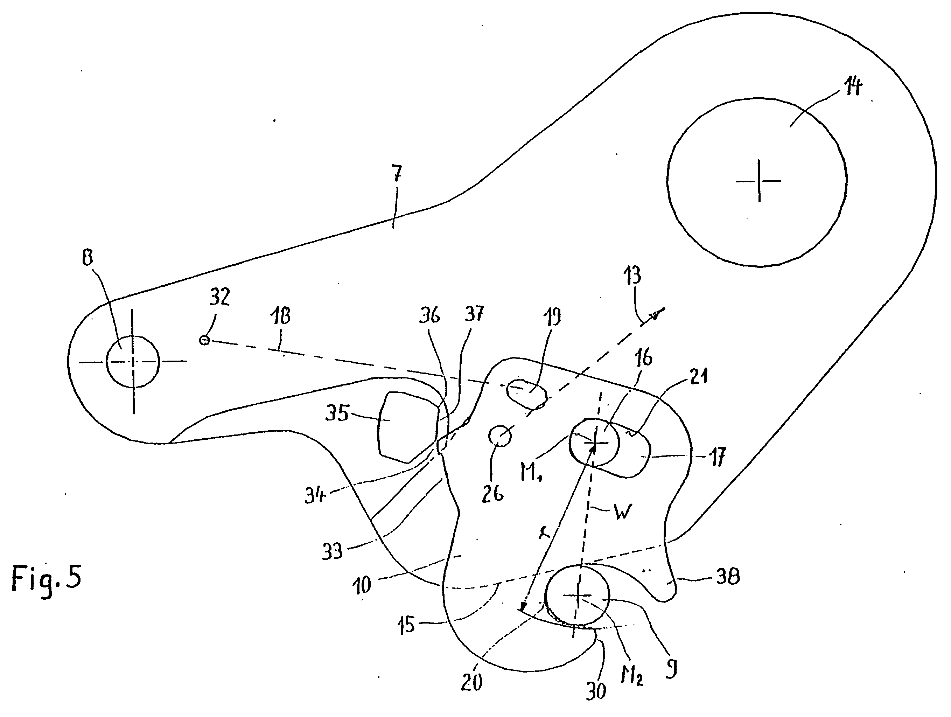

Die in Fig. 2 gezeigte Crashlage ist eine Momentaufnahme, die die Verriegelungsklinke 10 kurz vor Einleitung eines gewollten Öffnungsvorganges bzw. in der Stellung zeigt, die sie bei einem Frontcrash einnimmt, was unten noch näher erläutert wird. Um aus dieser Schließstellung in die in Fig. 3 gezeigte spielfreie Schließstellung zu gelangen, ist die Verriegelungsklinke 10 durch eine in den Fig. 2 bis 4 nur symbolisch mit einer Strich-Punkt-Linie dargestellten Zugfeder 18 beaufschlagt, die in einen an der Verriegelungsklinke 10 vorgesehenen Zapfen 19 eingehängt ist. Dieser Zapfen 19 ist an dem dem Klinkenmaul 20 gegenüberliegenden Ende der Verriegelungsklinke 10 angeordnet. Durch die Kraft der Zugfeder 18 wird die Verriegelungsklinke 10 um den Anschlagbolzen 9 herum im Gegen-Uhrzeigersinn verschwenkt. Dadurch bewegt sich der Lagerbolzen 16 relativ gesehen im Langloch 17 im Uhrzeigersinn. Da die vom Anschlagbolzen 9 abgewandte Wandung 21 des Langlochs 17 als Spannfläche mit konstanter Steigung ausgebildet ist, kommt der Lagerbolzen 16 bei seiner Relativbewegung in Zwängung mit der Wandung 21 des Langlochs 17. Dadurch wird jegliches Spiel in der Halterung des Adapters 7 am Anschlagbolzen 9 eliminiert. Wie aus Fig. 3 zu erkennen ist, ist zwischen dem Lagerbolzen 16 und der rechten Wandung des Langlochs 17 noch genügend Spiel a vorhanden, so daß verschleißbedingte Toleranzen automatisch ausgeglichen werden, indem die Verriegelungsklinke 10 bei auftretendem Spiel durch die Kraft der Zugfeder 18 entsprechend weiter im Gegen-Uhrzeigersinn um den Anschlagbolzen 9 geschwenkt wird.

Durch die Verlegung der Spannfläche in das Langloch 17 ergeben sich für das Klinkenmaul 20 Gestaltungsfreiräume. Diese werden unter anderem dazu benutzt, daß der Anschlagbolzen 9 in den in den Fig. 2 und 3 gezeigten Schließstellungen an der hinteren Wandung des Klinkenmauls 20 anliegt. Dies ist möglich, da hier kein Spiel zum Ausgleich verschleißbedingter Toleranzen mehr erforderlich ist. Das Klinkenmaul 20 ist dadurch kürzer als nach dem Stand der Technik erforderlich, und die Verriegelungsklinke 10 kann bei gleich großen aufzunehmenden Kräften schwächer, also mit geringerer Wandstärke ausgeführt werden.

Die oben erwähnte Gestaltungsfreiheit am Klinkenmaul 20 wird weiterhin dahingehend genutzt, daß die den Anschlagbolzen 9 von unten umgreifende Anlagefläche des Klinkenmauls 20 auf einem Radius r um die Mittelachse M1 des Lagerbolzens 16 liegt, wenn sich dieser in der Crashlage (Fig. 2) befindet.

Die in die Verriegelungsklinke 10 eingehängte Zugfeder 18 ist mit ihrem anderen Ende in einen Hebelarm 24 eines Steuerblechs 22 eingehängt, das schwenkbar an einem Zapfen 23 am Adapter 7 befestigt ist. Das Steuerblech 22 besitzt einen Steuerdaumen 25, der dem Hebelarm 24, bezogen auf den die Schwenkachse des Steuerblechs 22 bildenden Zapfen 23, diametral gegenüber angeordnet ist. Der Steuerdaumen 25 liegt von oben auf dem Anschlagbolzen 9 auf, wodurch ein Schwenken des Steuerblechs 22 um den Zapfen 23 im Uhrzeigersinn verhindert ist. Dadurch ist auch gewährleistet, daß der Hebelarm 24 ein festes Widerlager für die Zugfeder 18 bildet, d.h. daß diese im oben beschriebenen Sinne auf die Verriegelungsklinke 10 wirken kann.

Die Funktion der oben beschriebenen Konstruktion wird nachstehend ausgehend von der in Fig. 3 gezeigten spielfreien Schließstellung in bezug auf einen Crashfall (Fig. 2) und ein gewolltes Öffnen (Fig. 4) erläutert.

Im Crashfall wirkt auf der die Mittelachsen M1 des Lagerbolzens 16 und M2 des Anschlagbolzens 9 verbindenden Linie W eine starke Zugkraft auf die Verriegelungsklinke 10, die bestrebt ist, den Abstand zwischen dem Anschlagbolzen 9 und dem Lagerbolzen 16 zu vergrößern, d.h., die Rückenlehne 3 nach vorn zu klappen. Da der Lagerbolzen 16 an der als ansteigende Spannfläche wirkenden Wandung 21 des Langlochs 17 anliegt, resultiert aus dieser Zugkraft ein Drehmoment, das die Verriegelungsklinke 10 im Uhrzeigersinn so weit verschwenkt, bis der Lagerbolzen 16 an die linke Wandung des Langlochs 17 anschlägt (Fig. 2). Aus dieser Figur geht hervor, daß die Wirkungslinie W der Zugkraft in dieser Situation senkrecht auf der Anlagefläche des Klinkenmauls 20 steht, so daß kein öffnendes Drehmoment auf die Verriegelungsklinke 10 wirkt. Die Verriegelungsklinke 10 ist also ohne zusätzliche Sicherungselemente crashsicher.

Um die Verriegelungsklinke 10 zum Nachvornklappen der Rükkenlehne 3 lösen zu können, ist an deren dem Klinkenmaul 20 gegenüberliegenden Ende ein Zapfen 26 vorgesehen, in den der eingangs erwähnte Bowdenzug 13 eingehängt ist. Wird der Bowdenzug 13 mittels des Betätigungsgliedes 12 gezogen, schwenkt die Verriegelungsklinke 10 zunächst in die Crashstellung gemäß Fig. 2. Aufgrund des dann weiter wirkenden, durch den Bowdenzug 13 aufgebrachten Drehmoments schwenkt die Verriegelungsklinke 10 nun um den an das Langloch 17 angeschlagenen Lagerbolzen 16, bis sie vom Anschlagbolzen 9 freikommt. Der Steuerdaumen 25 des Steuerblechs 22 liegt dabei immer noch auf dem Anschlagbolzen 9 auf, so daß der Arm 24 des Steuerblechs 22 weiterhin ein festes Widerlager für die Zugfeder 18 bildet. Diese wird durch die Schwenkbewegung der Verriegelungsklinke 10 gespannt. Wird nun der Bowdenzug 13, nachdem er vollständig gezogen wurde, losgelassen, rastet die Verriegelungsklinke 10 unter der Wirkung der Zugfeder 18 mit einer an ihrem oberen Ende vorgesehenen Rastnase 27 in das Ende eines Arretierarms 28 des Steuerblechs 22 ein.

Sie liegt in dieser Situation mit ihrem Rücken an einem adapterfesten Nocken 29 an und ist somit gemeinsam mit dem Steuerblech 22 gegen ein Verschwenken in beiden Richtungen festgelegt, d.h. sie behält beim Klappen der Rückenlehne 3 die in Fig. 4 gezeigte Position, auch nachdem der Steuerdaumen 25 des Steuerblechs 22 nicht mehr auf dem Anschlagbolzen 9 aufliegt, bei. Die Verriegelungsklinke 10 ist somit in ihrer Öffnungslage gesichert.

Damit gewährleistet ist, daß die Verriegelungsklinke 10 auch bei nicht vollständig gezogenem Bowdenzug 13 sicher mit dem Arretierarm 28 des Steuerblechs 22 verrastet, ist vorgesehen, daß die Nase 30 des Klinkenmauls 20 beim Klappen der Rückenlehne 3 an den Anschlagbolzen 9 anstößt. Das ist durch die gestrichelte Linie 31 in Fig. 4 angedeutet. Die Verriegelungsklinke 10 wird dadurch kurzzeitig und geringfügig um den Lagerbolzen 16 im Uhrzeigersinn geschwenkt. Diese Schwenkbewegung reicht aus, um die Verrastung mit dem Steuerblech 22 herbeizuführen.

Zur Herstellung der Gebrauchslage wird die Rückenlehne zurückgeklappt. Dabei schlägt der Steuerdaumen 25 des Steuerblechs 22 auf den Anschlagbolzen 9 auf und dreht das Steuerblech 22 im Gegen-Uhrzeigersinn um den Zapfen 23. Dadurch kommt die Verriegelungsklinke 10 vom Arretierarm 28 des Steuerblechs 22 frei, und die Zugfeder 18 zieht die Verriegelungsklinke 10 in die spielfreie Schließstellung gemäß Fig. 3.

In den Fig. 5 - 9 ist eine zweite Ausführungsform der vorliegenden Erfindung gezeigt. Bauteile, die mit denen des ersten Ausführungsbeispiels identisch oder gleichwirkend sind, tragen die gleichen Bezugszeichen wie die entsprechenden Bauteile des ersten Ausführungsbeispieles.

Im Unterschied zum ersten Ausführungsbeispiel kommt hier das Steuerblech 22 zum Wegfall, welches ein zusätzliches bewegtes Bauteil darstellt und somit unter Umständen zu Funktionsstörungen führen kann. Die Funktion des Steuerbleches 22 übernimmt ein Steuernocken 35 im Zusammenspiel mit einem am Klinkenmaul 20 ausgebildeten Steuerfinger 38. Der Steuernocken 35 ist aus dem Adapter 7 herausgedrückt. Diese Ausbildung trägt zur Gewichtseinsparung bei. Der Steuernocken 35 besitzt eine Haltekante 36 und eine Steuerfläche 37. Er ist in Nachbarschaft zur Rückseite der Verriegelungsklinke 10 angeordnet, wobei die Rückseite als Steuerfläche 33 mit einer Steuernase 34 ausgebildet ist.

Auch bei diesem Ausführungsbeispiel ist eine symbolisch mit einer Strich-Punkt-Strich-Linie dargestellte Zugfeder 18 vorgesehen, die hier im Unterschied zum vorhergehenden Ausführungsbeispiel mit ihrem von der Verriegelungsklinke 10 abgewandten Ende in einen adapterfesten Zapfen 32 eingehängt ist.

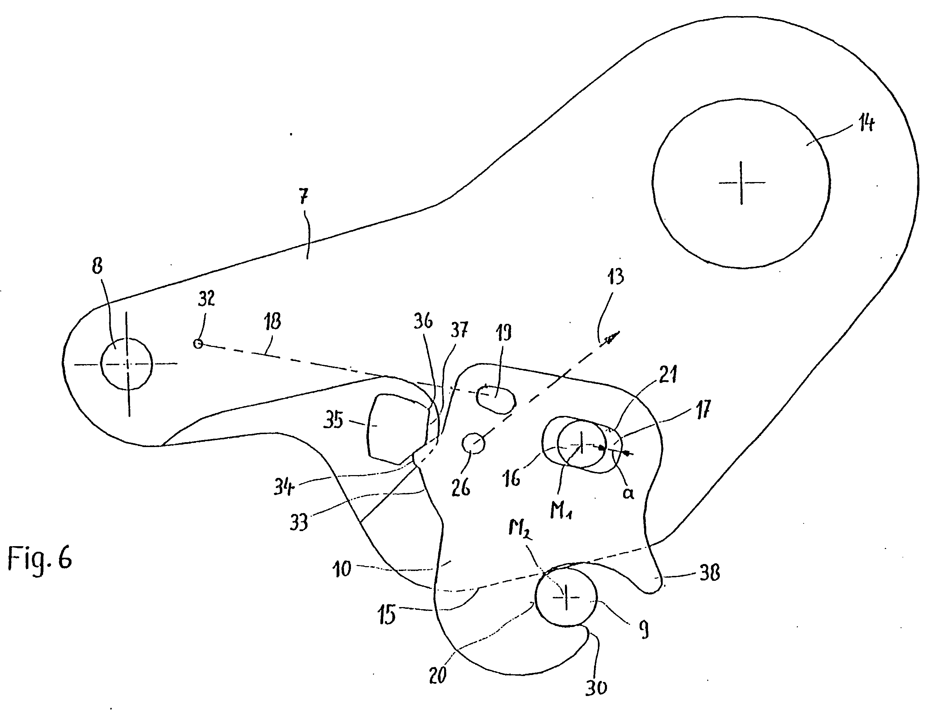

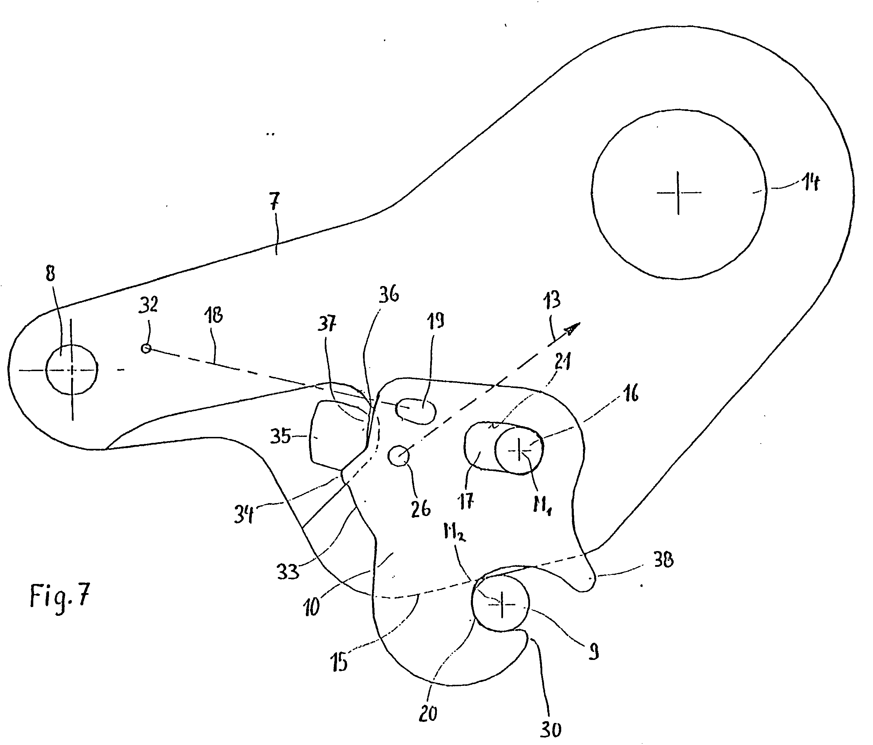

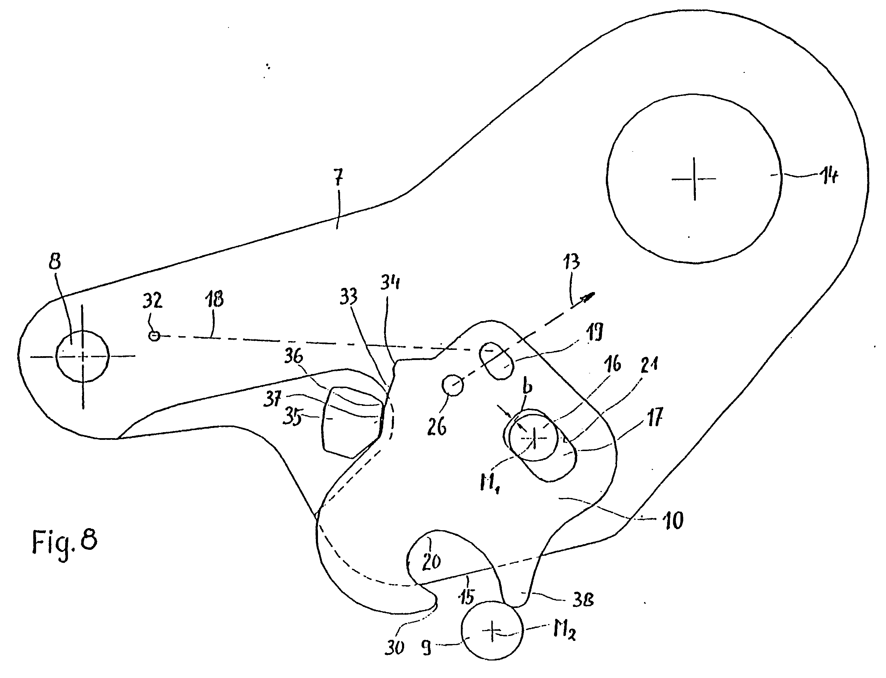

Das Zusammenwirken des Steuernockens 35 mit der Steuerfläche 33 der Verriegelungsklinke 10 wird nachstehend anhand eines Entriegelungs- und Verriegelungsvorganges der Rückenlehne 3, ausgehend von der in Fig. 6 dargestellten spielfreien Schließstellung, erläutert.

Um die Verriegelungsklinke 10 zum Nachvornklappen der Rükkenlehne 3 lösen zu können, ist an deren dem Klinkenmaul 20 gegenüberliegenden Ende ein Zapfen 26 vorgesehen, in den der eingangs erwähnte Bowdenzug 13 eingehängt ist. Wird der Bowdenzug 13 mittels des Betätigungsgliedes 12 gezogen, schwenkt die Verriegelungsklinke 10 zunächst in die Crashstellung gemäß Fig. 5. Aufgrund des dann weiter wirkenden, durch den Bowdenzug 13 aufgebrachten Drehmoments schwenkt die Verriegelungsklinke 10 nun um den an das Langloch 17 angeschlagenen Lagerbolzen 16 weiter im Uhrzeigersinn. Dabei bewegt sich die Steuernase 34 dicht an der Steuerfläche 37 des Steuernockens 35 vorbei nach oben. Zwängungen zwischen der Steuernase 34 und der Steuerfläche 37 können nicht auftreten, da die Steuerfläche 37 auf einem Kreisbogen um die Mittelachse M1 des Lagerbolzens 16 liegt. Gleichzeitig mit der Betätigung des Bowdenzuges 13 wird die Rückenlehne 3 geklappt, so daß die Verriegelungsklinke 10 vom Anschlagbolzen 9 freikommt. Wird nun der Bowdenzug 13 bzw. dessen Betätigungsglied 12 losgelassen, zieht die Zugfeder 18 die Verriegelungsklinke 10 mit ihrer Steuerfläche 33 im Gegen-Uhrzeigersinn in Anlage an die Steuerfläche 37 des Steuernockens 35. Dadurch kommt der Lagerbolzen 16 von der benachbarten Seitenwandung des Langlochs 17 um einen entsprechenden Betrag frei, was in den Figuren 8 und 9 durch das Spiel b angedeutet ist.

In den Figuren 8 und 9 sind zwei mögliche Anlagepositionen der Steuerflächen 37 und 33 dargestellt. Fig. 8 zeigt die maximal mögliche Entriegelungsstellung der Verriegelungsklinke 10, die bei einem entsprechend langen Zugweg des Bowdenzuges 13 erreicht werden kann, während Fig. 9 die Situation zeigt, die am Ende des Entriegelungsvorganges vorliegt. In dieser Position ist die Steuernase 34 hinter der Haltekante 36 des Steuernockens 35 verrastet. Die Verriegelungsklinke 10 ist somit in ihrer Öffnungslage gesichert.

Nach jedem Entriegelungsvorgang gelangt die Verriegelungsklinke 10 aus der in Fig. 8 gezeigten Position bzw. auch aus jeder Zwischenposition automatisch in die Klapposition gem. Fig. 9. Die Steuerfläche 33 der Verriegelungsklinke 10 liegt in diesem Bereich ebenfalls auf einem Kreisbogen um die Mittelachse M₁ des Lagerbolzens 16. Nach dem Loslassen des Bowdenzuges 13 gleiten daher die beiden Steuerflächen 33 und 37 unter der Einwirkung der Zugfeder 18 aufeinander ab, bis die Steuernase 34 hinter der Haltekante 36 des Steuernockens 35 einrastet.

Damit gewährleistet ist, daß die Verriegelungsklinke 10 auch bei nicht vollständig gezogenem Bowdenzug 13 sicher verrastet, ist vorgesehen, daß die Nase 30 des Klinkenmauls 20 beim Klappen der Rückenlehne 3 etwas an den Anschlagbolzen 9 anstößt. Das ist durch die gestrichelte Linie 31 in Fig. 9 angedeutet. Die Verriegelungsklinke 10 wird dadurch kurzzeitig und geringfügig um den Lagerbolzen 16 im Uhrzeigersinn geschwenkt. Diese Schwenkbewegung reicht aus, um die Verrastung mit der Haltekante 36 herbeizuführen.

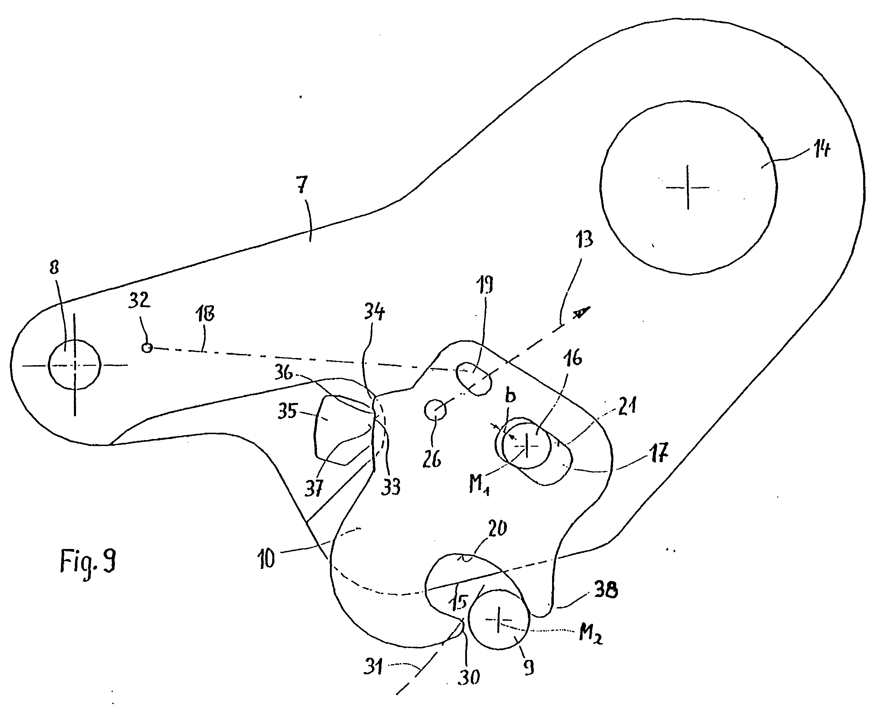

Wie oben stehend erläutert, liegt vor dem bzw. beim Zurückklappen der Rückenlehne 3 die in Fig. 9 gezeigte Position der Verriegelungsklinke 10 vor. Um die Arretierung der Öffnungslage der Verriegelungsklinke 10 aufheben zu können, ist ein den oberen Abschluß des Klinkenmauls 20 bildender Steuerfinger 38 vorgesehen. Dieser schlägt, kurz bevor die Unterseite 15 des Adapters 7 wieder auf dem Anschlagbolzen 9 aufliegt, mit seiner Innenseite auf den Anschlagbolzen 9 auf, so daß die Verriegelungsklinke 10 im Gegen-Uhrzeigersinn schwenkt, wodurch die Steuernase 34 von der Haltekante 36 des Steuernockens 35 freikommt. Die Steuernase 34 gleitet dann auf der Steuerfläche 37 des Steuernockens 35 abwärts. Aufgrund der Anlage der Steuernase 34 an der Steuerfläche 37 kann die Zugfeder 18 die Verriegelungsklinke 10 nicht vorzeitig verschwenken. Die Verriegelungsklinke 10 ist also in diesem Stadium zwangsgeführt, so daß ein Auftreffen der Nase 30 des Klinkenmauls 20 auf den Anschlagbolzen 9 ausgeschlossen ist. Erst wenn die Steuernase 34 von der Steuerfläche 37 freikommt (Fig. 5), kann die Zugfeder 18 die Verriegelungsklinke 10 im Gegen-Uhrzeigersinn weiter verschwenken, so daß sich wieder eine spielfreie Verriegelungsstellung (Fig. 6 und 7) einstellt. Ansonsten gilt für dieses Ausführungsbeispiel das für das erste Ausführungsbeispiel Gesagte.

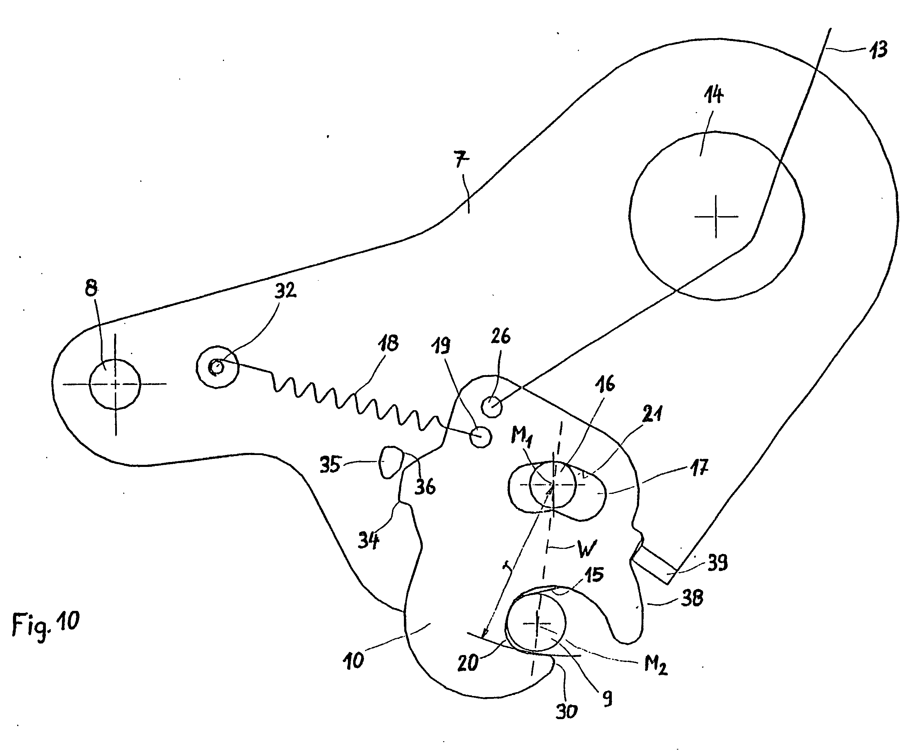

In den Fig. 10 bis 14 ist eine dritte Ausführungsform der vorliegenden Erfindung dargestellt. Bauteile, die mit denen der vorstehenden Ausführungsbeispiele identisch oder gleichwirkend sind, tragen wiederum die gleichen Bezugszeichen wie die entsprechenden Bauteile der vorstehenden Beispiele.

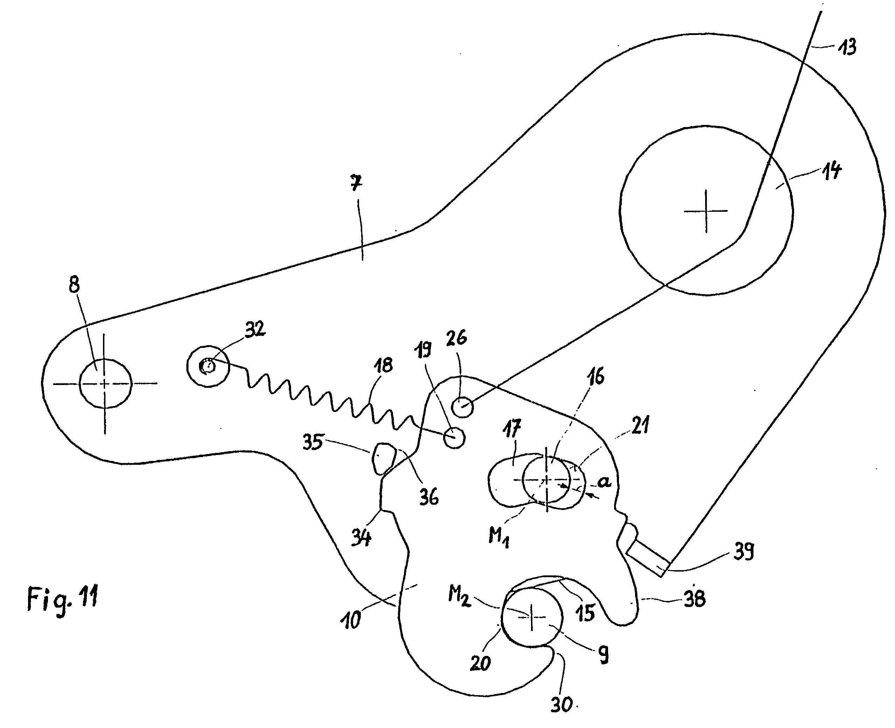

Wenn zwei, auf jeder Sitzseite eine, oder mehrere Verriegelungsklinken 10, z.B. bei Sitzbänken, zum Einsatz kommen, kann es vorkommen, daß aufgrund von Toleranzen die Bowdenzüge 13 zur Betätigung der Verriegelungsklinken 10 ungleiche Seillängen haben. Dies würde dazu führen, daß bei Betätigung des Betätigungsgliedes 12 (Fig. 1) eine oder mehrere Verriegelungklinken 10 geöffnet hätten, während die andere oder anderen Verriegelungsklinken 10 noch in einem Zwischenstadium hängen würden, also nicht geöffnet hätten, und so ein Klappen der Rückenlehne 3 verhindern würden. Im Rahmen der vorliegenden Erfindung läßt sich dieses Problem dadurch lösen, daß die Langlöcher 17 der Verriegelungsklinken 10 in Modifikation des vorstehenden Ausführungsbeispiels über die Crashlage hinaus in Öffnungsrichtung verlängert sind. Die Funktionsweise dieser modifizierten Ausführungsform wird nachstehend, ausgehend von Fig. 11, anhand eines gewollten Öffnens der Verriegelungsklinke 10 erläutert.

In der in Fig. 11 gezeigten, spielfreien Schließstellung der Verriegelungsklinke 10 ist der Lagerbolzen 16 unter der Wirkung der in die Verriegelungsklinke 10 eingehängten Zugfeder 18 auf die als Spannfläche wirkende Wandung 21 des Langloches 17 aufgelaufen. Der Adapter 7 ist dadurch spielfrei auf dem Anschlußbolzen 9 festgelegt. Um die Verriegelungsklinke 10 zu. öffnen, muß der Bowdenzug 13 gezogen werden. Aufgrund des dadurch auf die Verriegelungsklinke 10 wirkenden Moments dreht sich diese zunächst um den Anschlagbolzen 9, bis die in Fig. 10 gezeigte Situation erreicht ist, die auch der Crashlage entspricht. (Vergl. Fig. 2 und 5 der vorstehenden Ausführungsbeispiele). Durch das Ablaufen des Lagerbolzens 16 auf der Wandung 21 des Langloches 17 ist wieder ein Spiel in die Halterung des Adapters 7 am Anschlagbolzen 9 gekommen. Auch in dieser Stellung ist der Adapter 7 weiterhin verriegelt, da die Wirkungslinie W der Zugkraft (Verbindungslinie der Mittelpunkte M₁ und M₂ von Lagerbolzen 16 und Anschlagbolzen 9) senkrecht auf der Anlagefläche des Klinkenmauls 20 an den Anschlagbolzen 9 steht. Dementsprechend kann die Rückenlehne 3 in dieser Situation auch nicht gewollt nach vorn geklappt werden. Um dies zu erreichen, ist die Verriegelungsklinke 10 durch weiteren Zug am Bowdenzug 13 zu öffnen.

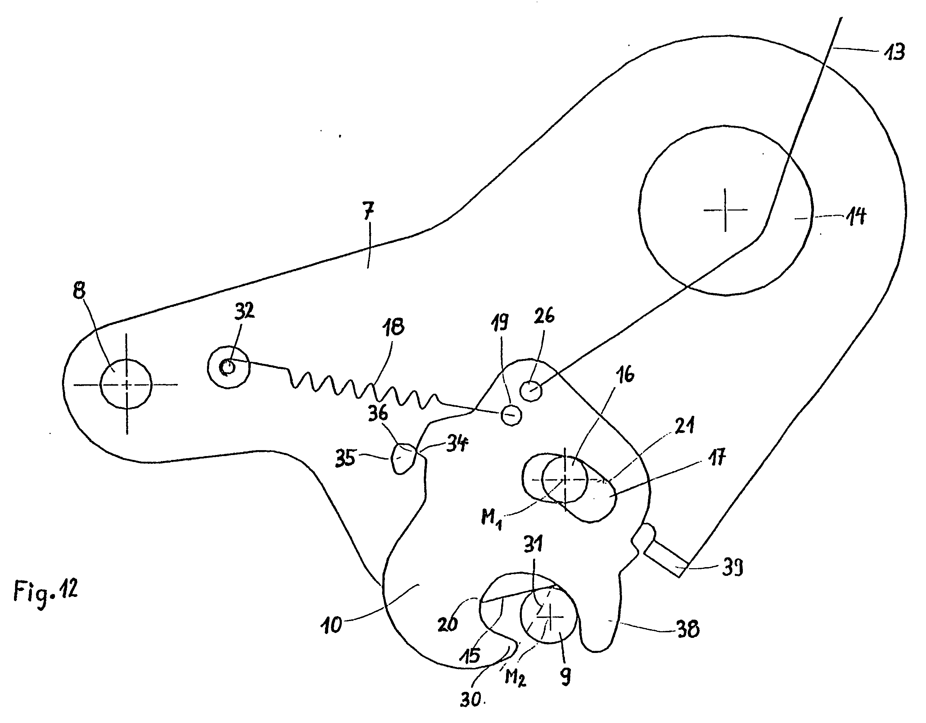

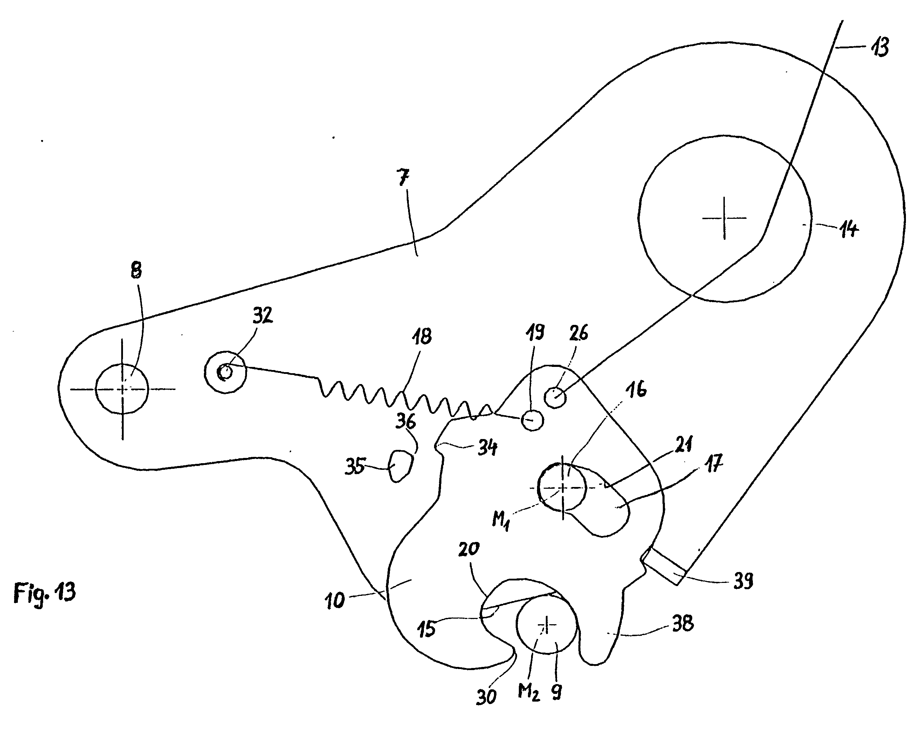

Aus den Darstellungen gemäß den Fig. 10 bis 14 ist ersichtlich, daß das Langloch 17 gegenüber den vorstehenden Ausführungsbeispielen über die Crashstellung hinaus in Öffnungsrichtung verlängert ist, wobei es etwa eine bohnenförmige Kontur besitzt. Der Lagerbolzen 16 hat also hier relativ gesehen, im Gegensatz zu den anderen Ausführungsbeispielen, die Möglichkeit, sich im Langloch 17 im Gegenuhrzeigersinn über seine Crashlage hinaus weiter zu verschieben. In der in Fig. 10 gezeigten Situation liegt die Verriegelungsklinke 10 an ihrer Vorderseite an einem vom Adapter 7 abgewinkelten Anschlag 39 an. Durch weiteren Zug am Bowdenzug 13 schwenkt und verlagert sich die Verriegelungsklinke 10 zunächst um den Lagerbolzen 16 herum so weit, bis der Steuerfinger 38 des Klinkenmauls 20 am Anschlagbolzen 9 anliegt. Der Anschlag 39 sichert dabei, insbesondere bei Schwergängigkeit, diese Zwangssteuerung der Verriegelungsklinke 10, mit anderen Worten, sie verhindert, daß die Verriegelungsklinke 10 weiter um den Anschlagbolzen 9 schwenkt, sondern bei weiterem Zug am Bowdenzug 13 zwangsweise öffnet. Diese Situation ist in Fig. 12 dargestellt. Bei weiterem Zug am Bowdenzug 13 schwenkt die Verriegelungsklinke 10 mit dem am Anschlagbolzen 9 anliegenden Steuerfinger 38 des Klinkenmauls 20 weiter im Uhrzeigersinn, bis der Lagerbolzen 16 an die, bezogen auf die Zeichnung, linke Wandung des Langlochs 17 anliegt. Nun ist die maximale Entriegelungsstellung der Verriegelungsklinke 10 erreicht. Diese Situation geht aus Fig. 13 hervor.

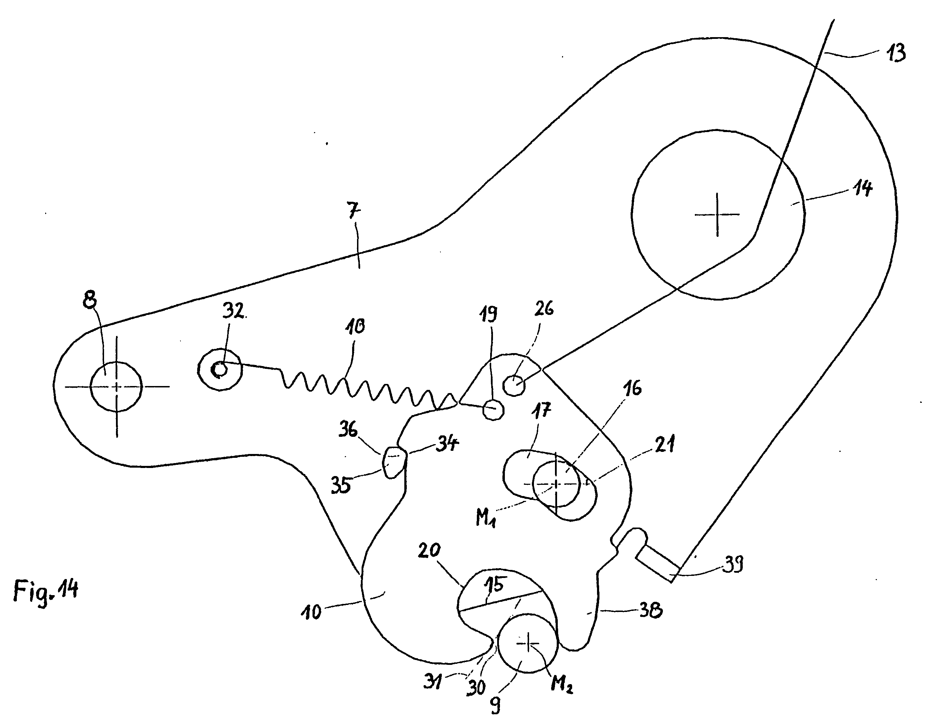

Eine vergleichende Betrachtung der Fig. 11, 10, 12 und 13 zeigt, daß sich die auf der Rückseite der Verriegelungsklinke 10 angeordnete Steuernase 34 während der Öffnungsbewegung der Verriegelungsklinke 10 zwängungsfrei am adapterfesten Steuernocken 35 vorbeibewegt hat. Wird der Bowdenzug 13 nun in der in Fig. 13 gezeigten, maximalen Entriegelungsstellung losgelassen, zieht die Zugfeder 18 die Verriegelungsklinke 10 im Gegenuhrzeigersinn in Anlage an den Steuernocken 35, so daß die Haltenase 34 der Verriegelungsklinke 10 hinter der Haltekante 36 des Steuernokkens 35 verrastet, wie aus Fig. 14 hervorgeht, die die Klappstellung der Verriegelungsklinke 10 zeigt. Die Rückenlehne 3 Verriegelungsklinke 10 sicher beibehalten wird, da diese durch die Zugfeder 18 in Anlage an den Steuernocken 35 gehalten wird. Beim Vorklappen der Rückenlehne kann die Nase 30 des Klinkenmauls 20 den Anschlagbolzen 9 leicht tuschieren, was durch die gestrichelte Linie 31 angedeutet ist. Dies ist jedoch nicht schädlich, da die Verriegelungsklinke 10 nur geringfügig im Uhrzeigersinn verschwenkt wird, ohne daß jedoch ihre Steuernase 34 vom Steuernocken 35 freikommt.

Die oben stehend beschriebene Verlängerung des Langloches 17 dient beim Vorhandensein von zwei oder mehreren Verriegelungsklinken 10 dem Toleranzausgleich bei ungleichen Seillängen der Bowdenzüge 13. Während mindestens eine der Verriegelungsklinken 10 immer die in Fig. 13 gezeigte maximale Entriegelungsstellung erreicht (Betätigungsglied 12 maximal gezogen), gewährleistet die Verlängerung des Langloches 17 jeder Verriegelungsklinke 10, daß die andere bzw. anderen Verriegelungsklinke(n) 10 zumindest eine Lage gemäß Fig. 12 erreicht bzw. erreichen, die eine minimale Entriegelungsposition darstellt, aus der die Rückenlehne 3 ebenfalls problemlos vorgeklappt werden kann. Ein Blick auf Fig. 12 zeigt, daß die Steuernase 34 der Verriegelungsklinke 10 die Haltekante 36 des Steuernockens 35 noch nicht passiert hat, sondern durch die Zugfeder 18 gehalten am Steuernocken 35 anliegt. Die Verriegelungsklinke 10 ist also für den Klappvorgang noch nicht in ihrer Lage gesichert. Das passiert aber durch den Klappvorgang selbst. In Fig. 12 ist durch die gestrichelte Linie 31 angedeutet, daß die Nase 30 des Klinkenmauls 20 beim Klappen der Rückenlehne 3 auf den Anschlagbolzen 9 aufläuft, wodurch die Verriegelungsklinke 10 im Uhrzeigersinn verschwenkt wird. Ihre Steuernase 34 kommt dadurch vom Steuernocken 35 frei und, nachdem die Nase 30 des Klinkenmauls 20 den Anschlagbolzen 9 passiert hat, zieht die Zugfeder 18 die Verriegelungsklinke 10 in die Klappstellung gemäß Fig. 14. Ansonsten gilt das zum vorstehenden Ausführungsbeispiel Gesagte.

## Patentansprüche

1. Fahrzeugsitz mit klappbarer Rückenlehne (3), die mittels Adaptern (7) drehgelenkig am Sitzrahmen gehaltert ist, welche eine Verriegelungsklinke (10) auf einem Lagerbolzen (16) schwenkbar aufnehmen, die in Schließstellung mit ihrem Klinkenmaul (20) einen sitzteilfesten Anschlag (9) umgreift und mittels eines Lösegliedes (12, 13) entriegelbar ist, **dadurch gekennzeichnet, daß** die Verriegelungsklinke (10) mittels eines Langlochs (17) auf dem Lagerbolzen (16) gelagert ist, wobei die dem Anschlag (9) abgewandte Wandung (21) des Langlochs (17 als Spannfläche ausgebildet ist, auf die der Lagerbolzen (16) beim Schließen der Verriegelungsklinke (10) aufläuft.

2. Fahrzeugsitz nach Anspruch 1, **dadurch gekennzeichnet, daß** die Verriegelungsklinke (10) durch eine Kraft beaufschlagt ist, die sie um den sitzteilfesten Anschlag (9) schwenkt, wodurch der Lagerbolzen (16) auf die Wandung (21) des Langlochs (17) aufläuft.

3. Fahrzeugsitz nach Anspruch 1 oder Anspruch 2, **dadurch gekennzeichnet, daß** am Adapter (7) ein Steuerblech (22) schwenkbar angeordnet ist, welches einen Arretierarm (28) besitzt, der die beim Öffnungsvorgang um den Lagerbolzen (16) schwenkende Verriegelungsklinke (10) hintergreift und dadurch deren Öffnungslage sichert.

4. Fahrzeugsitz nach Anspruch 3, **dadurch gekennzeichnet, daß** eine Nase (30) des Klinkenmauls (20) beim Vorklappen der Rücken-lehne (3) an den Anschlagbolzen (9) anstößt, wodurch die Verrie-gelungsklinke (10) kurzzeitig in Öffnungsrichtung verschwenkt, um bei nicht vollständig betätigtem Löseglied (13) ein sicheres Verrasten der Verriegelungsklinke (10) mit dem Arretierarm (28) des Steuerblechs (22) herbeizuführen.

5. Fahrzeugsitz nach Anspruch 3 oder 4, **dadurch gekennzeichnet, daß** das Steuerblech (22) einen Steuerdaumen (25) besitzt, der beim Zurückklappen der Rückenlehne (3) in die Gebrauchslage auf den sitzteilfesten Anschlag (9) auftrifft, wodurch das Steuerblech (22) um seine Schwenkachse (23) schwenkt und der Arretierarm (28) die Verriegelungsklinke (10) freigibt.

6. Fahrzeugsitz nach Anspruch 1 oder 2, **dadurch gekennzeichnet, daß** die Rückseite der Verriegelungsklinke (10) als Steuerfläche (33) ausgebildet und benachbart dazu ein adapterfester Steuernocken (35) vorgesehen ist, der durch Anlage an die Steuerfläche (33) zum einen die Öffnungslage der Verriegelungsklinke (10) und zum anderen, im Zusammenwirken mit einem den oberen Abschluß des Klinkenmauls (20) bildenden Steuerfinger (38), ein zwangsgesteuertes Verschwenken der Verriegelungsklinke (10) in ihre Schließstellung sichert.

7. Fahrzeugsitz nach Anspruch 6, **dadurch gekennzeichnet, daß** auf der Rückseite der Verriegelungsklinke (10) eine Steuernase (34) ausgebildet ist und der Steuernocken (35) eine Haltekante (36) aufweist, hinter der die Steuernase (34) beim Öffnen der Verriegelungsklinke (10) einrastet und so deren Öffnungsstellung sichert.

8. Fahrzeugsitz nach Anspruch 6 oder 7, **dadurch gekennzeichnet, daß** auf der Rückseite der Verriegelungsklinke (10) eine Steuernase (34) ausgebildet ist und der Steuernocken (35) eine Steuerfläche (37) aufweist, auf der die Steuernase (34) beim Schließen der Verriegelungsklinke (10) entlanggleitet, bis diese in ihre Schließstellung schwenken kann.

9. Fahrzeugsitz nach Anspruch 7, **dadurch gekennzeichnet, daß** eine Nase (30) des Klinkenmauls (20) beim Vorklappen der Rückenlehne (3) an den Anschlagbolzen (9) anstößt, wodurch die Verriegelungsklinke (10) kurzzeitig in Öffnungsrichtung verschwenkt, um bei nicht vollständig betätigtem Löseglied (13) ein sicheres Verrasten der Verriegelungsklinke (10) an der Haltekante (36) des Steuernockens (35) herbeizuführen.

10. Fahrzeugsitz nach Anspruch 6, **dadurch gekennzeichnet, daß** das Langloch (17) über die Crashlage des Lagerbolzens (16) hinaus hinaus in Öffnungsrichtung verlängert ist.

## Claims

1. A vehicle seat having a tiltable backrest (3) mounted in hinged manner on the seat frame by means of adapters (7) which receive a locking catch (10) on a bearing pin (16) in pivotable manner, said locking catch reaching around a stop (9) fixed to the seat part with its catch jaw (20) in the closed position and being unlockable by means of a release element (12, 13), **characterised in that** the locking catch (10) is mounted on the bearing pin (16) by means of an elongated hole (17), the wall (21) of the elongated hole (17) which is remote from the stop (9) being constructed as a clamping face against which the bearing pin (16) moves as the locking catch (10) closes.

2. A vehicle seat according to Claim 1, **characterised in that** the locking catch (10) is acted upon by a force which pivots it about the stop (9) fixed to the seat part, causing the bearing pin (16) to move against the wall (21) of the elongated hole (17).

3. A vehicle seat according to Claim 1 or Claim 2, **characterised in that**, arranged in pivotable manner on the adapter (7), there is a control plate (22) having a detent arm (28) which reaches behind the locking catch (10) pivoting about the bearing pin (16) during the opening procedure and thus secures its open position.

4. A vehicle seat according to Claim 3, **characterised in that** a lug (30) of the catch jaw (20) abuts against the stop pin (9) as the backrest (3) is tilted forwards, as a result of which the locking catch (10) pivots briefly in the opening direction in order to bring about secure latching of the locking catch (10) with the detent arm (28) of the control plate (22) when the release element (13) is not fully activated.

5. A vehicle seat according to Claim 3 or 4, **characterised in that** the control plate (22) has a control thumb (25) which strikes the stop (9) fixed to the seat part as the backrest (3) is tilted back into the position of use, as a result of which the control plate (22) pivots about its pivot axis (23) and the detent arm (28) releases the locking catch (10).

6. A vehicle seat according to Claim 1 or 2, **characterised in that** the rear side of the locking catch (10) is constructed as a control face (33) and a control cam (35) fixed to the adapter is provided adjacent thereto, which control cam, by contacting the control face (33), secures the open position of the locking catch (10) on the one hand and, in conjunction with a control finger (38) forming the upper end of the catch jaw (20), ensures that the locking catch (10) is forced to pivot into its closed position on the other.

7. A vehicle seat according to Claim 6, **characterised in that** a control lug (34) is constructed on the rear side of the locking catch (10) and the control cam (35) has a holding edge (36) behind which the control lug (34) latches as the locking catch (10) opens and thus secures its open position.

8. A vehicle seat according to Claim 6 or 7, **characterised in that** a control lug (34) is constructed on the rear side of the locking catch (10) and the control cam (35) has a control face (37) along which the control lug (34) slides as the locking catch (10) closes until this latter is able to pivot into its closed position.

9. A vehicle seat according to Claim 7, **characterised in that** a lug (30) of the catch jaw (20) abuts against the stop pin (9) as the backrest (3) is tilted forwards, as a result of which the locking catch (10) pivots briefly in the opening direction in order to bring about secure latching of the locking catch (10) against the holding edge (36) of the control cam (35) when the release element is not fully activated.

10. A vehicle seat according to Claim 6, **characterised in that** the elongated hole (17) extends in the opening direction beyond the crash position of the bearing pin (16).

## Revendications

1. Siège de véhicule automobile avec un dossier rabattable (3) maintenu de manière articulée et tournante sur le bâti du siège au moyen d'adaptateurs (7) qui reçoivent sur un boulon de palier (16) un cliquet de verrouillage (10) orientable qui, en position de fermeture, entoure avec sa mâchoire (20) une butée (9) disposée fixe sur l'assise, et qui peut être déverrouillé au moyen d'un élément de desserrage (12,13), **caractérisé en ce que** le cliquet de verrouillage (10) est logé sur le boulon de palier (16) au moyen d'un trou oblong (17), la paroi (21) opposée à la butée (9) du trou oblong (17) étant conçue comme surface de fixation, sur laquelle monte le boulon de palier (16) lors de la fermeture du cliquet de verrouillage (10).

2. Siège de véhicule automobile suivant la revendication 1, **caractérisé en ce qu'**une force est appliquée sur le cliquet de verrouillage (10), qui le fait pivoter autour de la butée (9) disposée fixe sur la partie assise, ce qui fait monter le boulon de palier (16) sur la paroi (21) du trou oblong (17).

3. Siège de véhicule automobile suivant la revendication 1 ou 2, **caractérisé en ce qu'**une tôle de commande (22) est disposée pivotable sur l'adaptateur (7), tôle de commande (22) qui possède un bras d'arrêt (28) passant derrière le cliquet de verrouillage (10), lorsque celui-ci pivote autour du boulon de palier lors du processus d'ouverture, ce qui assure la position d'ouverture.

4. Siège de véhicule automobile suivant la revendication 3, **caractérisé en ce qu'**un talon (30) de la mâchoire de cliquet (20) bute contre la tige de butée (9), lorsque le dossier est rabattu vers l'avant, ce qui fait pivoter le cliquet de verrouillage (10) brièvement dans la direction d'ouverture, afin d'entraîner, à élément de desserrage (13) non entièrement actionné, un enclenchement sûr du cliquet de verrouillage (10) avec le bras d'arrêt (28) de la tôle de commande (22).

5. Siège de véhicule suivant la revendication 3 ou 4, **caractérisé en ce que** la tôle de commande (22) possède un mentonnet de commande (25) qui heurte la butée disposée fixe sur l'assise (9), lorsque le dossier (3) est rabattu dans sa position d'utilisation, ce qui fait pivoter la tôle de commande (22) autour de son axe de pivotement (23), le bras d'arrêt (28) libérant, alors, le cliquet de verrouillage (10).

6. Siège de véhicule suivant la revendication 1 ou 2, **caractérisé en ce que** la face arrière du cliquet de verrouillage (10) est conçue comme surface de commande (33) et qu'il est prévu dans son voisinage une came de commande (35) disposée fixe sur l'adaptateur, qui assure, d'une part, la position d'ouverture du cliquet de verrouillage (10) en s'appuyant sur la surface de commande (33), et qui assure, d'autre part, un pivotement forcé du cliquet de verrouillage (10) dans sa position de fermeture, en concourant avec un doigt de commande (38) qui forme l'extrémité de la mâchoire de cliquet (20).

7. Siège de véhicule suivant la revendication 6, **caractérisé en ce qu'**un talon de commande (34) est formé sur la face arrière du cliquet de verrouillage (10) et que la came de commande (35) présente une arête de retenue (36), derrière laquelle le talon de commande (34) s'enclenche lors de l'ouverture du cliquet de verrouillage (10), assurant ainsi la position d'ouverture de celui-ci.

8. Siège de véhicule suivant la revendication 6 ou 7, **caractérisé en ce qu'**un talon de commande (34) est formé sur la face arrière du cliquet de verrouillage (10) et que la came de commande (35) présente une surface de commande (37), le long de laquelle le talon de commande (34) glisse lors de la fermeture du cliquet de verrouillage (10) jusqu'à ce que celui-ci puisse pivoter dans sa position de fermeture.

9. Siège de véhicule suivant la revendication 7, **caractérisé en ce qu'**un talon (30) de la mâchoire de cliquet (20) heurte la tige de butée (9) lorsque le dossier (3) est incliné vers l'avant, ce qui a pour effet de faire pivoter le cliquet de verrouillage (10) brièvement dans la direction d'ouverture, afin d'entraîner, à élément de desserrage (13) non entièrement actionné, un enclenchement sûr du cliquet de verrouillage (10) avec l'arête de retenue (36) de la came de commande (35).

10. Siège de véhicule suivant la revendication 6, **caractérisé en ce que** le trou oblong (17) est prolongé au-delà de la crash position du boulon de palier (16) dans la direction d'ouverture.
